# EUROPÄISCHE PATENTSCHRIFT

(11) **EP 0 659 849 B1**
(45) Veröffentlichungstag und Bekanntmachung des Hinweises auf die Patenterteilung: **09.09.1998**
(21) Anmeldenummer: 94118173.7
(22) Anmeldetag: 18.11.1994
(51) Int. Cl.: C09D 5/18

(54) **Klare, aufblähbare, flammhemmende Überzugsmassen**
Clear, foamable, flame-retardant coating compositions
Compositions de revêtement retardatrices d'inflammation, claires, expansibles

(30) Priorität: 21.12.1993 DE 4343669
(43) Veröffentlichungstag der Anmeldung: 28.06.1995
(73) Patentinhaber: Clariant GmbH, 65929 Frankfurt am Main (DE)
(72) Erfinder: Scholz, Guido, Dr., D-50859 Köln (DE); Pirig, Wolf-Dieter, D-53879 Euskirchen (DE)

(56) Entgegenhaltungen:
- EP-A- 0 468 259
- US-A- 4 247 435
- DATABASE WPI Derwent Publications Ltd., London, GB; AN 70-73111R[40] XP002007579 & JP-B-45 031 689 (DAI-ICHI KOGYO SEIYAKU CO.)
- DATABASE WPI Derwent Publications Ltd., London, GB; AN 79-76006b[42] XP002007580 & JP-A-54 113 999 (GO-OH KAGAKU KOG. KK. ET AL)

## Beschreibung

Die vorliegende Erfindung betrifft klare, aufblähbare, flammhemmende Überzugsmassen, welche mindestens aus

| | |
|---|---|
| 10 bis 70 | Gewichts% eines filmbildenden Bindemittels, |
| 0 bis 40 | Gewichts% mindestens einer bei Hitzeeinwirkung carbonisierenden Substanz, |
| 0 bis 40 | Gewichts% eines Treibmittels, |
| 0 bis 5 | Gewichts% Dispergiermittel, |
| 0 bis 25 | Gewichts% Füllstoffe |

bestehen.

Es sind klare, flammhemmende Überzugsmassen, beispielsweise für Holz oder Kunststoffe, bekannt, welche auf einem in organischen Lösungsmitteln gelösten Bindemittel basieren und einen beträchtlichen Anteil Chlorparaffine enthalten (vergl. BHATNAGAR und VERGNAUD in: "Fire Safety Journal" 4 (3), 163-7 und "Paintindia" 32 (1) 3-6, 14; 1982).

Nachteilig ist bei den bekannten klaren, flammhemmenden Überzugsmassen, daß sie beim Trocknen Lösungsmitteldämpfe abgeben und organisch gebundenes Halogen enthalten, wodurch bei der Zersetzung der Überzugsmassen korrosive und toxische Gase freigesetzt werden.

Es ist daher Aufgabe der vorliegenden Erfindung, klare, aufblähbare Überzugsmassen anzugeben, welche flammhemmende Eigenschaften besitzen, bei deren Zersetzung jedoch keine halogenhaltigen Verbindungen freigesetzt werden. Das wird erfindungsgemäß dadurch erreicht, daß in den Überzugsmassen als Builder wäßrige Kunstharzdispersionen und als bei Hitzeeinwirkung carbonisierende Substanz bzw. als Treibmittel und als Säurespender Ammoniumsalze von Phosphorsäurealkylestern enthalten sind.

Die Überzugsmassen gemäß der Erfindung können weiterhin wahlweise auch noch dadurch ausgestaltet sein, daß
a) Phosphorsäuremonoalkylester enthalten sind;
b) Phosphorsäuredialkylester enthalten sind;
c) die Salze hydroxyalkylsubstituierte Ammoniumsalze sind;
d) als hydroxyalkylsubstituiertes Ammonium Monoethanolamin verwendet ist;
e) als hydroxyalkylsubstituiertes Ammonium Diethanolamin verwendet ist;
f) als hydroxyalkylsubstituiertes Ammonium Triethanolamin verwendet ist;
g) die Salze alkylsubstituierte Ammoniumsalze sind;
h) der Alkylrest 1 bis 6 C-Atome aufweist;
i) die Salze arylsubstituierte Ammoniumsalze sind.

Die in den erfindungsgemäßen Überzugsmassen enthaltenen Ammoniumsalze von Phosphorsäurealkylestern können beispielsweise nach dem aus der US-PS 4 118 443 bekannten Verfahren hergestellt werden.

In den Überzugsmassen gemäß der Erfindung können auch Gemische von Phosphorsäuremonoalkylestern und Phosphorsäuredialkylestern enthalten sein.

Die in den erfindungsgemäßen Überzugsmassen enthaltenen Ammoniumsalze von Phosphorsäurealkylester wirken nicht nur flammhemmend, sondern verleihen den Massen auch weichmachende Eigenschaften. Sie wirken sich damit positiv auf die Filmrißbeständigkeit der flammhemmenden Überzugsmassen aus und können somit Chlorparaffine und andere halogenhaltige Additive, beispielsweise Tris(2-chlorethyl)phosphat (TCEP) oder Tris(2-chlorisopropyl)phosphat (TCPP) vollständig substituieren.

In den folgenden Beispielen werden flammhemmende Überzugsmassen hergestellt und ihre Wirksamkeit ermittelt. Die Prüfung der Isolierfähigkeit der unter Verwendung dieser Überzugsmassen hergestellten Intumeszenzanstriche erfolgte nach DIN 4102, Teil 2 (1977) in einem Kleinprüfstand gemäß DIN 4102, Teil 8 (1986), während die Prüfung der Oberflächengüte visuell vorgenommen wurde.

### Beispiel 1 (Vergleichsbeispiel)

In ein mit Dissolverscheibe ausgestattetes Rührgefäß wurden nacheinander eingetragen:

| | |
|---|---|
| 16,8 Gew.% | Wasser |
| 3 Gew.% | ®Tylose |
| 0,2 Gew.% | ®Lopon 890 |
| 11 Gew.% | Ammoniumdihydrogenphosphat |
| 5 Gew.% | Tris(hydroxyethyl)isocyanurat |
| 62 Gew.% | ®Maprenal LH 692 |
| 2 Gew.% | Chlorparaffin 5o flüssig |

### Beispiel 2 (Vergleichsbeispiel)

Es wurde die gleiche Überzugsmasse wie in Beispiel 1 hergestellt, jedoch war anstelle von ®Maprenal LH 692 ®Urecoll HM verwendet.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 3 (Vergleichsbeispiel)

Es wurde die gleiche Überzugsmasse wie in Beispiel 1 hergestellt, jedoch ohne die Komponente Chlorparaffin.

Die Beschichtung war klar und die Oberfläche des mit dieser Überzugsmasse versehenen Bleches war rauh und von feinen Rissen durchzogen.

Die Brandprüfung des beschichteten Bleches gemäß DIN 41o2 ergab die Feuerwiderstandsklasse F 3o

### Beispiel 4 (Vergleichsbeispiel)

Es wurde die gleiche Überzugsmasse wie in Beispiel 1 hergestellt, jedoch waren anstelle von 62 Gew% ®Maprenal LH 692 59 Gew% ® Urecoll HM und 4 Gew% ®Kauramin verwendet.

Die Beschichtung war klar und die Oberfläche des mit dieser Überzugsmasse versehenen Bleches war glatt und rißfrei.

Die Brandprüfung des beschichteten Bleches gemäß DIN 41o2 erfüllte die Anforderungen der Feuerwiderstandsklasse F 3o.

### Beispiel 5 (Vergleichsbeispiel)

Es wurde die gleiche Überzugsmasse wie in Beispiel 1 hergestellt, jedoch waren anstelle von 2 Gew% Chlorparaffin 5o flüssig 2 Gew.% Tris(2-chlorethyl)phosphat verwendet.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 6 (gemäß der Erfindung)

Es wurde die gleiche Überzugsmasse wie in Beispiel 1 hergestellt, jedoch waren anstelle von 11 Gew-.% Ammoniumdihydrogenphosphat und 2 Gew.% Chlorparaffin 5o flüssig 14 Gew% eines auf pH 7 eingestellten Monoethanolammoniumsalzes des ®Knapsack Phosphorsäureesters MDE verwendet. Gleichzeitig wurde das Tris(hydroxyethyl)isocyanurat auf 4 Gew% reduziert.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 7 (gemäß der Erfindung)

Es wurde die gleiche Überzugsmasse wie in Beispiel 1 hergestellt, jedoch waren anstelle von 11 Gew.% Ammoniumdihydrogenphosphat und 2 Gew.% Chlorparaffin 15 Gew.% eines auf pH 7 eingestellten Monoethanolammoniumsalzes der ® Knapsack Reinigerkomponente MPS verwendet; gleichzeitig war die Tris(hydroxyethyl)isocyanurat-Menge auf 3 Gew.% reduziert.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 8 (gemäß der Erfindung)

Es wurde die gleiche Überzugsmasse wie in Beispiel 1 hergestellt, jedoch waren anstelle von 11 Gew.% Ammoniumdihydrogenphosphat und 2 Gew.% Chlorparaffin 15 Gew.% eines auf pH 7 eingestellten Triethanolammoniumsalzes des ® Knapsack Phosphorsäureesters MDE verwendet; gleichzeitig wurde das Tris(hydroxyethyl)isocyanurat durch 2 Gew% Dicyandiamid ersetzt.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 9 (gemäß der Erfindung)

Es wurde die gleiche Überzugsmasse wie in Beispiel 1 hergestellt, jedoch waren anstelle von 11 Gew.% Ammoniumdihydrogenphosphat und 2 Gew.% Chlorparaffin 14 Gew.% eines auf pH 7 eingestellten Triethanolammoniumsalzes des ® Knapsack Phosphorsäureesters MDE verwendet; gleichzeitig wurde das Tris(hydroxyethyl)isocyanurat durch 3 Gew% Dicyandiamid ersetzt.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 1o (gemäß der Erfindung)

Es wurde die gleiche Überzugsmasse wie in Beispiel 1 hergestellt, jedoch waren anstelle von 11 Gew.% Ammoniumdihydrogenphosphat und 2 Gew.% Chlorparaffin 50 flüssig 8 Gew% eines auf pH 7 eingestellten Diethanolammoniumsalzes des ®Knapsack Phosphorsäureesters MDE und 7 Gew% eines auf pH 7 eingestellten Triphenylammoniumsalzes der ®Knapsack Reinigerkomponente MPS verwendet; gleichzeitig wurde das Tris(hydroxyethyl)isocyanurat durch 2 Gew% Dicyandiamid ersetzt.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

### Beispiel 11 (gemäß der Erfindung)

Es wurde die gleiche Überzugsmasse wie in Beispiel 1 hergestellt, jedoch waren anstelle von 11 Gew% Ammoniumdihydrogenphosphat und 2 Gew% Chlorparaffin 5o flüssig 8 Gew.% eines auf pH 7 eingestellten Diethanolammoniumsalzes des ®Knapsack Phosphorsäureesters MDE und 7 Gew% eines auf pH 7 eingestellten Tribenzylammoniumsalzes der ®Knapsack Reinigerkomponente MPS verwendet; gleichzeitig wurde das Tris(hydroxyethyl)isocyanurat durch 2 Gew% Dicyandiamid ersetzt.

Die Beschichtung war klar und die Oberfläche des mit dieser Überzugsmasse versehenen Bleches war glatt und rißfrei.

Die Brandprüfung des beschichteten Bleches gemäß DIN 41o2 ergab die Feuerwiderstandsklasse F 3o.

## Patentansprüche

1. Klare, aufblähbare, flammhemmende Überzugsmassen, mindestens bestehend aus
| | |
|---|---|
| 10 bis 70 Gewichts% | eines filmbildenden Bindemittels, |
| 0 bis 40 Gewichts% | mindestens einer bei Hitzeeinwirkung carbonisierenden Substanz, |
| 0 bis 40 Gewichts% | eines Treibmittels, |
| 0 bis 5 Gewichts% | Dispergiermittel |
| 0 bis 25 Gewichts% | Füllstoffe, |
dadurch gekennzeichnet, daß als Bindemittel wäßrige Kunstharzdispersionen und als bei Hitzeeinwirkung carbonisierende Substanz bzw. als Treibmittel und als Säurespender Ammoniumsalze von Phosphorsäurealkylestern in einer Menge von 1 bis 50 Gewichts% enthalten sind.

2. Überzugsmasse nach Anspruch 1, dadurch gekennzeichnet, daß Phosphorsäuremonoalkylester enthalten sind.

3. Überzugsmasse nach Anspruch 1, dadurch gekennzeichnet, daß Phosphorsäuredialkylester enthalten sind.

4. Überzugsmasse nach mindestens einem der Ansprüche 1 bis 3, dadurch gekennzeichnet, daß die Salze hydroxyalkylsubstituierte Ammoniumsalze sind.

5. Überzugsmasse nach Anspruch 4, dadurch gekennzeichnet, daß als hydroxyalkylsubstituiertes Ammonium Monoethanolamin verwendet ist.

6. Überzugsmasse nach Anspruch 4, dadurch gekennzeichnet, daß als hydroxyalkylsubstituiertes Ammonium Diethanolamin verwendet ist.

7. Überzugsmasse nach Anspruch 4, dadurch gekennzeichnet, daß als hydroxyalkylsubstituiertes Ammonium Triethanolamin verwendet ist.

8. Überzugsmasse nach mindestens einem der Ansprüche 1 bis 3, dadurch gekennzeichnet, daß die Salze alkylsubstituierte Ammoniumsalze sind.

9. Überzugsmasse nach Anspruch 8, dadurch gekennzeichnet, daß der Alkylrest 1 bis 6 C-Atome aufweist.

10. Überzugsmasse nach mindestens einem der Ansprüche 1 bis 3, dadurch gekennzeichnet, daß die Salze arylsubstituierte Ammoniumsalze sind.

## Claims

1. A clear, expandable, flame-retardant coating composition comprising at least
| | |
|---|---|
| from 10 to 70% | by weight of a film-forming binder, |
| from 0 to 40% | by weight of at least one substance which is carbonized under the effect of heat, |
| from 0 to 40% | by weight of an expansion agent, |
| from 0 to 5% | by weight of dispersants |
| from 0 to 25% | by weight of fillers, |
wherein aqueous synthetic-resin dispersions are present as binder and ammonium salts of alkyl phosphates are present as substance which is carbonized under the effect of heat and/or as expansion agent and as acid donor, in a quantity of from 1 to 50% by weight.

2. A coating composition as claimed in claim 1, wherein monoalkyl phosphates are present.

3. A coating composition as claimed in claim 1, wherein dialkyl phosphates are present.

4. A coating composition as claimed in at least one of claims 1 to 3, wherein the salts are hydroxyalkyl-substituted ammonium salts.

5. A coating composition as claimed in claim 4, wherein monoethanolamine is used as hydroxyalkyl-substituted ammonium.

6. A coating composition as claimed in claim 4, wherein diethanolamine is used as hydroxyalkyl-substituted ammonium.

7. A coating composition as claimed in claim 4, wherein triethanolamine is used as hydroxyalkyl-substituted ammonium.

8. A coating composition as claimed in at least one of claims 1 to 3, wherein the salts are alkylsubstituted ammonium salts.

9. A coating composition as claimed in claim 8, wherein the alkyl radical has 1 to 6 carbon atoms.

10. A coating composition as claimed in at least one of claims 1 to 3, wherein the salts are aryl-substituted ammonium salts.

## Revendications

1. Compositions de revêtement claires, gonflables, retardatrices d'inflammation, constituées d'au moins
| | |
|---|---|
| 10 à 70% | en poids d'un liant formant un film, |
| 0 à 40% | en poids d'au moins une substance carbonisante sous l'effet |
| | de la chaleur, |
| 0 à 40% | en poids d'un agent gonflant, |
| O à 5% | en poids d'un agent dispersant, |
| 0 à 25% | en poids de charges, |
caractérisées en ce que des dispersions aqueuses de résine synthétique sont contenues comme liant et des sels d'ammonium d'esters alkyliques d'acide phosphorique sont contenus comme substance carbonisante sous l'effet de la chaleur respectivement comme agent gonflant et comme dispensateur d'acide dans une quantité de 1 à 50% en poids.

2. Compositions de revêtement selon la revendication 1, caractérisées en ce qu'elles contiennent des esters monoalkyliques d'acide phosphorique.

3. Compositions de revêtement selon la revendication 1, caractérisées en ce qu'elles contiennent des esters dialkyliques d'acide phosphorique.

4. Compositions de revêtement selon au moins l'une quelconque des revendications 1 à 3, caractérisées en ce que les sels sont des sels d'ammonium hydroxyalkyle-substitués.

5. Compositions de revêtement selon la revendication 4, caractérisées en ce que l'on utilise comme ammonium hydroxyalkyle-substitué la monoéthanolamine.

6. Compositions de revêtement selon la revendication 4, caractérisées en ce que l'on utilise comme ammonium hydroxyalkyle-substitué la diéthanolamine

7. Compositions de revêtement selon la revendication 4, caractérisées en ce que l'on utilise comme ammonium hydroxyalkyle-substitué la triéthanolamine.

8. Compositions de revêtement selon au moins l'une quelconque des revendications 1 à 3, caractérisées en ce que les sels sont des sels d'ammonium alkyle-substitués.

9. Compositions de revêtement selon la revendication 8, caractérisées en ce que le reste alkyle présente de 1 à 6 atomes de C

10. Compositions de revêtement selon au moins l'une quelconque des revendications 1 à 3, caractérisées en ce que les sels sont des sels d'ammonium aryle-substitués.
